# EUROPEAN PATENT APPLICATION

(11) **EP 4 588 828 A1**
(43) Date of publication of application: **23.07.2025**
(21) Application number: 24153028.6
(22) Date of filing: 22.01.2024
(51) Int. Cl.: B65G 1/04

(54) **A SLEEVE**

(71) Applicant: AUTOSTORE TECHNOLOGY AS, 5578 Nedre Vats (NO)
(72) Inventor: Heggebø, Jørgen, 5578 Nedre Vats (NO)
(74) Representative: Kilburn & Strode LLP

(57) **Abstract**

A sleeve for accommodating storage containers in a storage system comprises an open top end for receiving and releasing one or more storage containers, an open bottom end, and side walls. The sleeve is configured to allow passage for the one or more storage containers through the open top end. Associated systems and methods are also disclosed.

## Description

### TECHNICAL FIELD

The disclosure relates to a sleeve. More particularly, it relates to a sleeve for accommodating storage containers in a storage system, and a method of temporarily storing storage containers in a container storage and retrieval system.

### BACKGROUND

Traditional storage solutions usually involve the arrangement of goods on rows of shelves within a warehouse. The shelf location for each item is recorded in an inventory, and goods are retrieved from the shelves by a stock picker. The shelves are restocked and the inventory updated as needed as goods enter and leave the warehouse.

Warehouse workers may be assisted by robotic pickers and by automated inventory management systems. Automated transit systems may also be implemented in traditional warehouse set ups to move goods from their inventory location to a picking and/or packing station.

An alternative to a traditional warehouse set up is an automated storage and retrieval system in which robots retrieve items from their logged location within the warehouse and deliver the items to a packing station or port. Such systems can reduce or eliminate the space needed to pass between rows of shelves to access stock, thereby removing the need for broad aisles within the warehouse. One example of such a system involves placing goods in bins or containers that are configured to be stacked, side by side, within a three-dimensional grid. A rail system is arranged above the grid, along which robotic container handling vehicles configured to lift containers from the grid can travel. The container handling vehicles are configured to transport containers from the grid and to deliver them to ports or stations at periphery of the grid so that the goods from within the container can be picked and packed.

Generally, storage containers are dimensioned to fit into storage columns of the three-dimensional grid. For each storage and retrieval system, the storage containers may therefore have a standard size and structure which corresponds to that of the storage columns of that system.

If there is more than one standard size of storage container or storage column arranged within the grid, or if the storage containers are not of a standardised form, inefficiencies in the storage and retrieval system and limitations in arranging the containers may arise. In particular, robotic container-handling vehicles may be less efficient at lifting and depositing storage containers which are not stacked precisely and uniformly with neighbouring storage containers. This can lead to increased picking times; in other words, the time it takes for a container or item from a container to be delivered to an access point such as a port can be undesirably long. The present disclosure concerns components, systems and/or methods which address these inefficiencies in existing storage and retrieval systems and allow for more efficient rearranging of storage containers in the grid.

One or more aspects of the invention of the present application are set out in the claims.

### BRIEF DESCRIPTION OF THE DRAWINGS

The disclosure will now be described in more detail in connection with a number of exemplary embodiments shown in the accompanying drawings, in which:
Fig. 1 shows a perspective view of a storage system comprising a grid and a plurality of robotic container-handling vehicles configured to retrieve and/or rearrange goods stored within the grid;
Fig. 2 shows a top view of the system of Fig. 1;
Fig. 3A shows a side view of a first robotic container-handling vehicle suitable for use in the system of Fig. 1;
Fig. 3B shows a side view of a second robotic container-handling vehicle suitable for use in the system of Fig. 1;
Fig. 3C is a perspective side view of the robot of Fig. 3B;
Fig. 4 shows a computing device for implementing the operations described herein;
Fig. 5 shows a portion of the grid of Fig. 1 containing multi-container frames;
Fig. 6A shows a perspective view of two example multi-container frames;
Fig. 6B shows a side-on view of the example multi-container frames;
Fig. 6C shows a top-down view of the example multi-container frames;
Fig. 7A shows a cut-out view of an example multi-container frame, from which a first arrangement of containers stored within the multi-container frame is visible;
Fig. 7B shows a cut-out view of the example multi-container frame, from which a second arrangement of containers stored within the multi-container frame is visible;
Fig. 8A shows an example lifting device of a container-handling vehicle that is configured to couple to a multi-container frame to enable the multi-container frame to be lifted or lowered by the container-handling vehicle;
Fig. 8B shows a side-on view of the arrangement of Fig. 8A;
Fig. 8C shows the lifting device of Figs. 8A and 8B engaged with a multi-container frame;
Fig. 8D shows a side-on view of the arrangement of Fig. 8C;
Fig. 9 shows the example lifting device of Figs. 8A-D being lowered into contact with a multi-container frame;
Fig. 10 shows the example lifting device of Figs. 8A-D engaged with the multi-container frame;
Fig. 11 shows an example lifting device of a container-handling vehicle that is configured to couple to a container held within a multi-container frame to enable the container to be lifted or lowered by the container-handling vehicle;
Fig. 12 shows a container-handling vehicle lifting a container out of a multi-container frame;
Fig. 13A shows an exploded view of two sleeves arranged in a stack;
Fig. 13B shows a perspective view of the sleeves of Fig. 13A arranged upon multi-container frames in a vertical column of the grid of Fig. 1;
Fig. 14 shows an alternative form of the sleeve of Fig. 13A;
Fig. 15 shows three example forms of a sleeve configured to nest within the sleeve of Fig. 14;
Figs. 16A and 16B show exploded and cross-section views, respectively, of the sleeves of Fig. 15 nested within the sleeves of Fig. 14;
Figs. 17 and 18 show examples of sleeves for individual storage containers; and
Fig. 19 is a flowchart of a method of temporarily storing a storage container in a sleeve.

### DETAILED DESCRIPTION

The above-referenced problems associated with existing storage and retrieval systems may be addressed by providing a sleeve, or outer liner, that can be used to accommodate one or more storage containers. In this way, the sleeve can be used to assimilate different containers in existing vertical columns of a storage grid. For example, the sleeve may allow the mixing or stacking of differently sized containers in one storage system, improve versatility, and simplify container rearrangement.

In overview, the disclosure relates to a sleeve for accommodating one or more storage containers of the type used in a storage and retrieval system. The sleeve comprises an open top end for receiving and releasing one or more storage containers, so as to allow passage of the one or more storage containers through the open top end.

One or more vertical passages of the sleeve may be adapted to provide lateral support to and/or to guide the one or more storage containers through the sleeve. In some examples, each of the one or more vertical passages of the sleeve may be bounded, or delimited, at least partially, by at least one inner wall, or ridge, protruding inwardly from one or more side walls of the sleeve. The inner wall is adapted to provide lateral support to and/or to guide a storage container through the one or more vertical passages.

The sleeve may be retrievable by a robotic container-handling vehicle. In other examples, the sleeve is retrievable by a bespoke robotic sleeve-handling vehicle, which is configured to attach to corresponding attachment features of the sleeve and to arrange the sleeve within the grid. Alternatively, the sleeve may be arranged at a fixed location in the grid, e.g., in a vertical column of the grid.

A further aspect of the disclosure relates to a container storage and retrieval system including a storage grid and one or more sleeves arranged within a vertical column of the storage grid. The system may include one or more storage containers arranged in the grid, and one or more robotic vehicles arranged to traverse the storage grid, e.g., robotic vehicles configured to handle, arrange, and move the storage containers and/or sleeves between different locations within the storage grid.

In some implementations, the inner dimensions of a vertical passage of the sleeve correspond with the outer dimensions of one of the storage containers, such that the storage container closely fits within a vertical passage of the sleeve in the vertical column of the grid. In this way, the sleeve acts as an adaptor, assisting with dimensions of smaller or non-standard storage containers which would otherwise be as less well suited to fit in a vertical column of the storage grid. In particular, by providing one or more sleeves to act as adaptors for containers in the grid, smaller and alternatively shaped containers can be incorporated into the storage system with ease and the versatility of the storage and retrieval system is improved.

Additionally or alternatively, the sleeve may be configured to vertically guide the one or more storage containers into alignment on top of one another, i.e., in one or more vertically arranged stack. In such examples, the sleeve can provide side support for the vertically arranged stack(s) of storage containers within the sleeve. Aligning the storage containers, i.e., aligning the containers with one another and with the vertical column of the grid, enables a more seamless process during fetching of the containers with the robotic container-handling vehicles.

The sleeve may also be configured to enable the stacking of storage containers with different dimensions. For example, where the grid comprises one or more storage containers with a set of first dimensions (e.g., one or more bins) and at least one storage container having a second set of dimensions (e.g., a bin with a larger cross section, or a multi-container frame), the sleeve may be configured to accommodate the storage container having the first dimensions within a vertical passage of the sleeve, and to stack with or on top of the storage container having the second dimensions, within a vertical column of the storage grid.

The disclosure also relates to method of temporarily storing storage containers in a container storage and retrieval system. The method comprises identifying the location of a sleeve, and inserting, with a robotic vehicle, a target storage container into the sleeve for temporary storage. In some examples, prior to these steps, the method comprises identifying a second storage column comprising a storage container frame, or multi-container frame, in which the target storage container is nested (i.e., identifying the location of the target storage container), and retrieving, with the robotic vehicle, the target storage container out of the storage container frame.

The disclosure similarly relates to a controller comprising a processor and a memory, the controller configured to perform any of the methods as disclosed herein.

### Automated storage and retrieval system overview

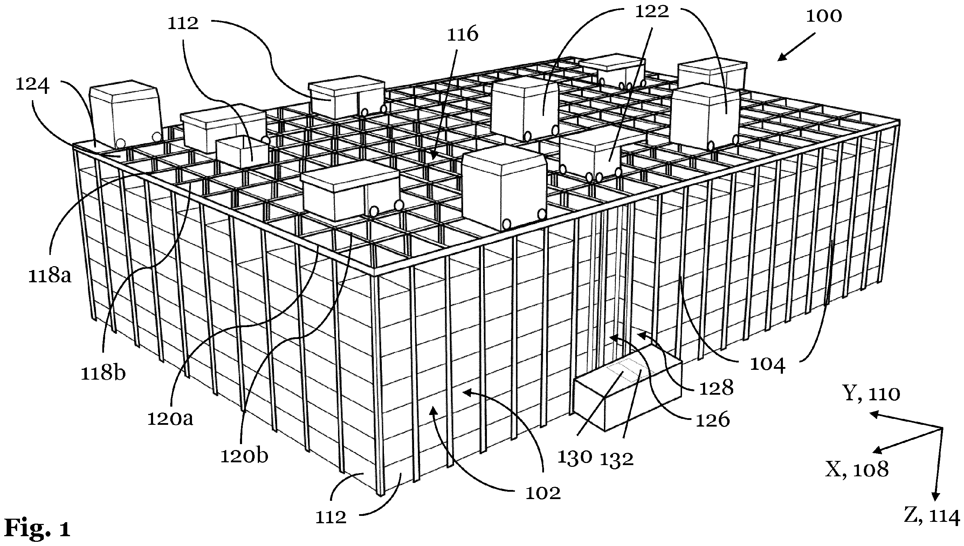

Referring to the embodiment shown in Fig. 1, a grid 100 comprises a frame formed by a plurality of generally rectilinear, adjacent vertical columns 102 formed between vertical frame members 104 and extending in the X and Y directions 108, 110. The grid elements may be fabricated of any appropriate material; for example, the frame members may be formed of extruded aluminium. Storage containers or bins 112 are stacked on top of each other, preferably in a self-supporting manner, in the Z direction 114 in the columns 102, forming a storage volume of storage cells for respective bins 112 extending in the X, Y and Z directions 108, 110, 114.

A rail system or network 116 is formed on top of the grid 100 and comprises pairs of vehicle rails or tracks 118a, 118b and 120a, 120b, respectively extending in the X and Y directions 108, 110. Robotic container-handling vehicles, or robots, 122, which can be of a range of size, shape and function, are provided and configured to run on the rails 118, 120 and to transport bins 112 in both the X and Y directions 108, 110. The robots 122 are additionally configured to lift and lower bins 112 from/into the columns 102 in the Z direction 114, the bins 112 optionally being guided by the vertical frame members 104. The robots 122 access the bins 112 via access openings 124 above the columns 102 and formed between the rails 118, 120.

Some columns 102 may be used for alternative purposes than bin storage. For example, port columns 126, 128 comprise port or access columns allowing transfer of a bin 112 in and/or out of the grid 100. Port columns 126, 128 provide a vertical channel for lifting of a bin 112 from, or lowering of a bin 112 to, a port or ports 130, 132. The ports 130, 132 are shown in Fig. 1 at the lowest level of the grid, however ports can be located at any vertical position along the column. The respective port columns 126, 128 can be assigned for removing ('drop-off) and/or returning or delivering ('pick-up') bins 112 from/to the grid 100. The ports 130, 132 are therefore configured to allow bins 112 to be removed and reintroduced (horizontally) into the associated port column. As such, a port 130, 132 can comprise a conveyor (not shown in Fig. 1) onto which a bin 112 may be lowered and transported horizontally out of the port column. The port columns 126, 128 include an opening or access point through which bins 112 can enter and leave the column.

Bins 112 can be transported along the top of the grid 100 to and/or from a port column 126, 128 by robots 122, and from a port 130, 132 to a location outside the grid 100, which may be an access station (not shown) for processing of the bin 112 or its contents, such as a picking station for adding content to, or removing content from, the bin 112. In alternative examples (not shown), the bin 112 may be transported to a port of another grid on the same or another level, or to an external facility. Transport of bins 112 to and from ports 130, 132 may be by any appropriate means (not shown) including conveyors, transport vehicles, lifts or robots.

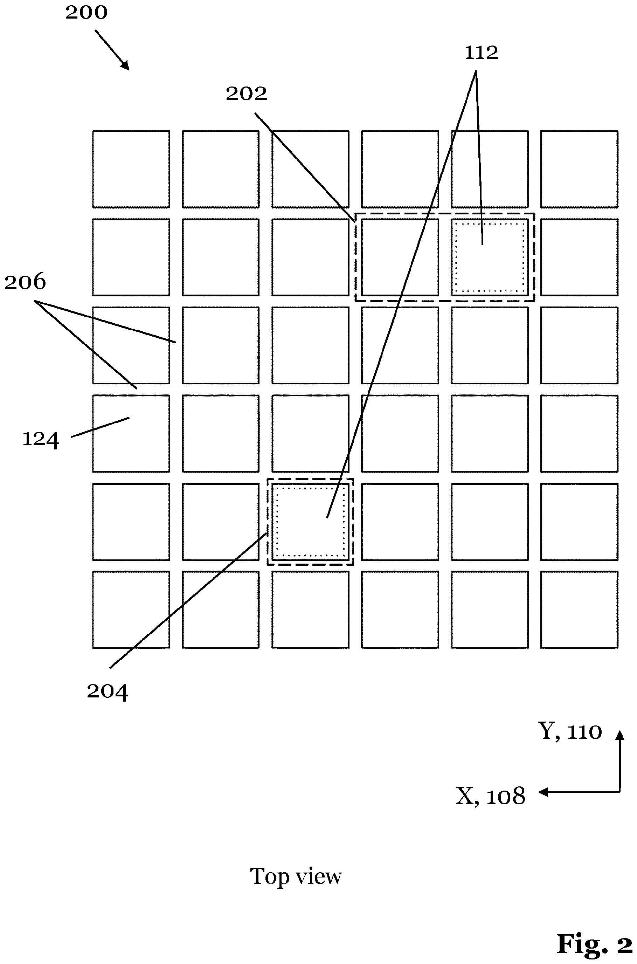

Referring to the embodiment shown in Fig. 2, the X-Y configuration 200 of the rail system 116 can be seen in more detail, together with robots 202, 204 of different types. The rail system includes rails 206 defining between them vertical column access openings 124 for access to bins 112. The rails 206 can be any appropriate type for permitting travel of the robots 202, 204 in the X and Y directions 108, 110 thereon, including (not shown) groove-type rails for receiving vehicle wheels, or protrusion-type rails for engaging wheel recesses. Each rail 206 may comprise a single track or multiple parallel tracks in each of the X and Y directions 108, 110.

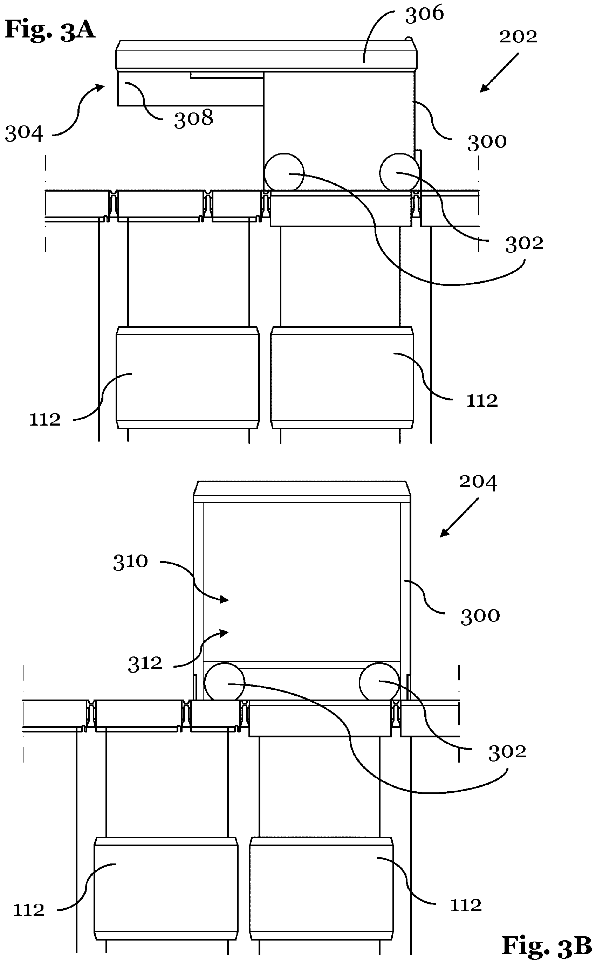

A first, 'cantilever' type of robot 202 is shown in more detail in Fig. 3A and includes a body 300, a set of wheels 302 and a lifting device 304. The body 300 contains operational equipment (not shown) for the robot 202 including drive, power and control systems. The wheels 302 permit movement of the robot 202 in one of the X and Y directions, an additional set of wheels (not visible in this view) permitting movement in the other of the X and Y directions, in both cases along the respective rails or tracks 206. One or both sets of wheels can be raised or lowered to permit selective engagement of the rails for movement in the desired direction. The lifting device 304 includes a cantilever element 306 extending in the X-Y plane from the top of the body 300, and a gripping device 308, which is raisable and lowerable from the cantilever element 306. The gripping device 308 is configured to grip or engage a bin 112; for example, by gripping a part of the bin 112, or by passively or actively engaging a suitably configured part of the bin 112.

A second, 'internal cavity' type of robot 204 is shown in more detail in Fig. 3B and includes, as an alternative to the cantilevered lifting system, an internal cavity 310 within the body 300 and in which the lifting device 312 including a gripping device (not shown) is located. In this case, the body 300 includes the robot's operational equipment and a storage space for one or more bins 112, for use, for example, while transporting the bin 112.

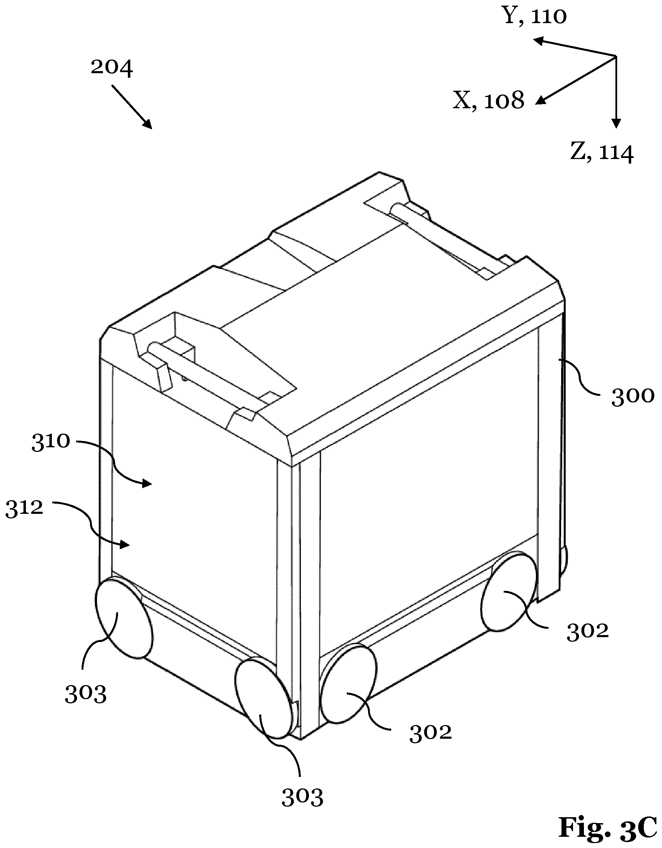

Fig. 3C shows a perspective side view of the robot of Fig. 3B in which the first set of wheels 302 from Fig. 3B are visible. The additional set of wheels referenced above but not shown in Fig. 3B are shown as wheels 303 in Fig. 3C. The additional set of wheels 303 is arranged perpendicular to the first set of wheels 302, to allow rolling of the robot 204 in the X and Y directions on the first and second set of wheels 302, 303 respectively. The first and second set of wheels 302, 303 shown in Fig. 3C may be configured to be independently lowered into engagement with the rails (and conversely raised out of engagement with the rails) to allow the robot 202 to move in the X and Y direction across the arrangement of rails shown in Fig. 2. Although the perspective view shown in Fig. 3C is of the robot 204 of Fig. 3B, it will be appreciated that a similar perpendicular wheel arrangement may be applied to the robot 202 of Fig. 3A.

### Control and monitoring system

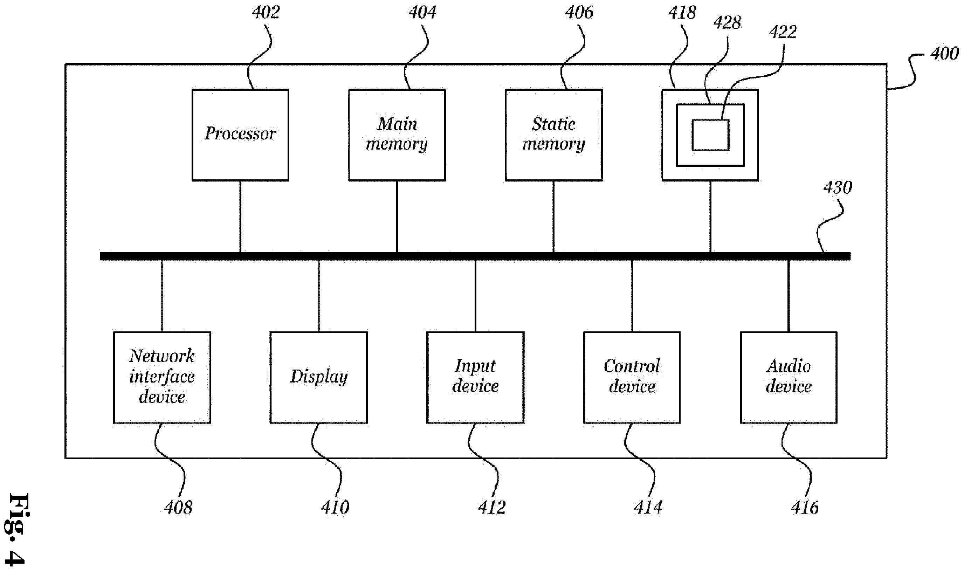

Control and monitoring of the automated storage and retrieval system, including monitoring and storing bin position and controlling bin delivery, retrieval and transport and robot routing and collision avoidance, is performed by a control system shown in Fig. 4 in communication with the robots and/or other controllable system components. Control can be performed locally or remotely and may be implemented by a processing system, for example in the form of a computing device. Accordingly, the methods described herein may form all or part of a computer-implemented method, or a system configured to perform the methods described herein.

With reference to Fig. 4, a processing system 400 suitable for carrying out the methods described herein will now be described. Fig. 4 shows a block diagram of one implementation of a processing system 400 in the form of a computing device within which a set of instructions for causing the computing device to perform any one or more of the methods described herein may be executed. In some implementations, the computing device may be connected (e.g., networked) to other machines in a Local Area Network (LAN), an intranet, an extranet, or the Internet. The computing device may operate in the capacity of a server or a client machine in a client-server network environment, or as a peer machine in a peer-to-peer (or distributed) network environment. The computing device may be a personal computer (PC), a tablet computer, a set-top box (STB), a Personal Digital Assistant (PDA), a cellular telephone, a web appliance, a server, a network router, switch or bridge, or any machine capable of executing a set of instructions (sequential or otherwise) that specify actions to be taken by that machine. Further, while only a single computing device is illustrated, the term 'computing device' shall also be taken to include any collection of machines (e.g., computers) that individually or jointly execute a set (or multiple sets) of instructions to perform any one or more of the methods described herein.

The example processing system 400 includes a processor 402, a main memory 404 (e.g., read-only memory (ROM), flash memory, dynamic random-access memory (DRAM) such as synchronous DRAM (SDRAM) or Rambus DRAM (RDRAM), etc.), a static memory 406 (e.g., flash memory, static random-access memory (SRAM), etc.), and a secondary memory (e.g., a data storage device 418), which communicate with each other via a bus 430.

Processor 402 represents one or more general-purpose processors such as a microprocessor, central processing unit, or the like. More particularly, the processor 402 may be a complex instruction set computing (CISC) microprocessor, reduced instruction set computing (RISC) microprocessor, very long instruction word (VLIW) microprocessor, processor implementing other instruction sets, or processors implementing a combination of instruction sets. Processor 402 may also be one or more special-purpose processors such as an application specific integrated circuit (ASIC), a field programmable gate array (FPGA), a digital signal processor (DSP), network processor, or the like. Processor 402 is configured to execute the processing logic (instructions 422) for performing the operations and steps described herein.

The processing system 400 may further include a network interface device 408. The processing system 400 also may include any of a video display unit 410 (e.g., a liquid crystal display (LCD) or a cathode ray tube (CRT)), an alphanumeric input device 412 (e.g., a keyboard or touchscreen), a cursor control device 414 (e.g., a mouse or touchscreen), and an audio device 416 (e.g., a speaker).

It will be apparent that some features of the processing system 400 shown in Fig. 4 may be absent. For example, the processing system 400 may have no need for display device 410 (or any associated adapters). This may be the case, for example, for particular server-side computer apparatuses which are used only for their processing capabilities and do not need to display information to users. Similarly, user input device 412 may not be required. In its simplest form, processing system 400 comprises processor 402 and main memory 404.

The data storage device 418 may include one or more machine-readable storage media (or more specifically one or more non-transitory computer-readable storage media) 428 on which is stored one or more sets of instructions 422 embodying any one or more of the methods or functions described herein. The instructions 422 may also reside, completely or at least partially, within the main memory 404 and/or within the processor 402 during execution thereof by the processing system 400, the main memory 404 and the processor 402 also constituting computer-readable storage media 428.

The various methods described herein may be implemented by a computer program. The computer program may include computer code arranged to instruct a computer to perform the functions of one or more of the various methods described herein. The computer program and/or the code for performing such methods may be provided to an apparatus, such as a computer, on one or more computer-readable media or, more generally, a computer program product. The computer-readable media may be transitory or non-transitory. The one or more computer-readable media could be, for example, an electronic, magnetic, optical, electromagnetic, infrared, or semiconductor system, or a propagation medium for data transmission, for example for downloading the code over the Internet. Alternatively, the one or more computer-readable media could take the form of one or more physical computer-readable media such as semiconductor or solid-state memory, magnetic tape, a removable computer diskette, a random-access memory (RAM), a read-only memory (ROM), a rigid magnetic disc, or an optical disk, such as a CD-ROM, CD-R/W or DVD.

The computer program is executable by the processor 402 to perform functions of the systems and methods described herein.

In an implementation, the modules, components, and other features described herein can be implemented as discrete components or integrated in the functionality of hardware components such as ASICS, FPGAs, DSPs, or similar devices.

A hardware component' is a tangible (e.g., non-transitory) physical component (e.g., a set of one or more processors) capable of performing certain operations and may be configured or arranged in a certain physical manner. A hardware component may include dedicated circuitry or logic that is permanently configured to perform certain operations. A hardware component may be or include a special-purpose processor, such as a field programmable gate array (FPGA) or an ASIC. A hardware component may also include programmable logic or circuitry that is temporarily configured by software to perform certain operations.

Accordingly, the phrase 'hardware component' should be understood to encompass a tangible entity that may be physically constructed, permanently configured (e.g., hardwired), or temporarily configured (e.g., programmed) to operate in a certain manner or to perform certain operations described herein.

In addition, the modules and components can be implemented as firmware or functional circuitry within hardware devices. Further, the modules and components can be implemented in any combination of hardware devices and software components, or only in software (e.g., code stored or otherwise embodied in a machine-readable medium or in a transmission medium).

### Operation of the automated storage and retrieval system

In operation, each bin 112 is given a unique identifier, which may be marked on the bin 112 using a computer-readable identifier (e.g., a barcode, quickresponse code or radio-frequency identification tag) to ease identification of the bin 112. A database of the processing system 400 stores, in association with the unique identifier, the position and, optionally, content of each bin 112. When a bin 112 is moved (e.g., when it is retrieved from the grid 100), the database is updated to record its change in position.

When it is desired to retrieve a bin 112 from the grid 100, under control of the processing system 400, a robot 202, 204 is routed via the rail system 116 to the vertical column 102 including the storage cell where, according to the database, the bin 112 is positioned, and the lifting device 304, 312 is positioned (according to robot type) over the corresponding access opening 124, either adjacent or below the robot 202, 204. The robot 202, 204 lowers the gripping device 308 which engages, grips and lifts the bin 112 to the robot 202, 204. The robot 202, 204 then transports the bin 112, for example, to the drop-off port column 126, 128 for delivery to the port 130, 132 and subsequent processing external to the grid 100. In the event that the target or designated bin 112 is below other bins in the stack then the robot 202, 204 or multiple robots, which may be dedicated to the task, are controlled in a 'digging' operation to sequentially lift and reposition, temporarily or permanently, bins above the target bin 112 in order for it to be retrieved. It will be appreciated that other operations in relation to the bin 112 can be carried out in a similar manner. For example, a bin 112 can be delivered for storage in the grid 100 at the port 130, 132 of the pick-up port column 126, 128, gripped and lifted by a robot 202, 204 and delivered to the desired storage cell, bins above the desired position being repositioned if necessary as discussed above.

### Multi-container frames

The grid may additionally or alternatively include multi-container frames, in other words frames or containers that are themselves configured to hold a plurality of other smaller containers. These multi-container frames can be stored and handled in the automated storage and retrieval system of the present disclosure in the same manner as the storage containers 112 referenced above in relation to Figs. 1-4. Accordingly, multi-container frames represent an example implementation of the storage containers 112 described above and shown in Figs. 1, 2, 3A and 3B. A multi-container frame may be configured to accommodate between two and six containers in a typical implementation, although larger multi-container frames are possible.

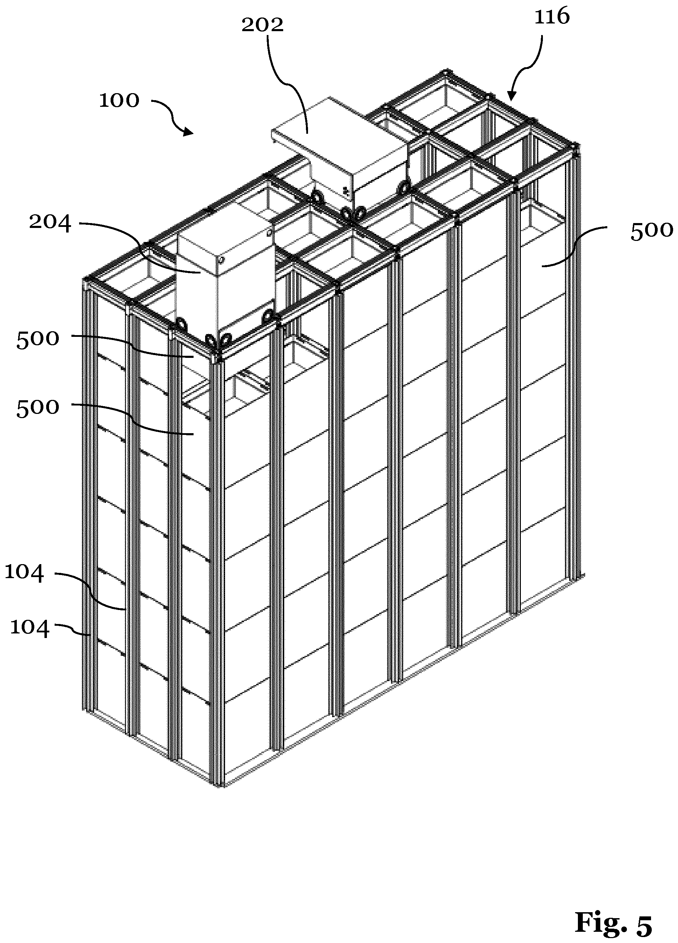

The multi-container frames are configured to accommodate a plurality of smaller bins or containers within them. In some cases, the smaller containers can be stacked one on top of another within the multi-container frame. In that case, the multi-container frame may be referred to as a "stacker frame" because the containers held within it are stacked on top of one another. For simplicity, the remainder of this description will focus on this form of multi-container frame. However, it will be appreciated that in other implementations (not shown in Figs. 5 to 12), the multi-container frame may accommodate a plurality of containers side-by-side or otherwise arranged, and the containers may not be stacked on top of one another within the multi-container frame. Accordingly, while the remainder of this disclosure focuses on stacker frames, this is not to be considered as limiting and the present disclosure relates to any form of multi-container frame configured to accommodate a plurality of containers within it.

Turning now to Fig. 5, this figure shows a subsection of the automated storage and retrieval system shown in Fig. 1. A portion of the grid 100 can be seen together with robotic container-handling vehicles 202, 204 operating on the rail system 116. In the system shown in Fig. 5, the storage containers 112 stored in the visible portion of the grid 100 are multi-container frames 500. As noted above, in this implementation the multi-container frames 500 are all stacker frames 500, in which the containers are stored one on top of the other. Accordingly, for simplicity, the phrase "stacker frame" will be used hereafter. However, the following description applies to any form of multi-container frame.

As can be seen from Fig. 5, one of the stacker frames 500 is in the process of being lifted by container-handling vehicle 204. This lifting is performed in a similar manner as discussed above in relation to the containers 112 of Fig. 1 and the lifting mechanisms discussed in relation to Figs. 3B and 3C. Further details of how stacker frames 500 can be lifted will be described below.

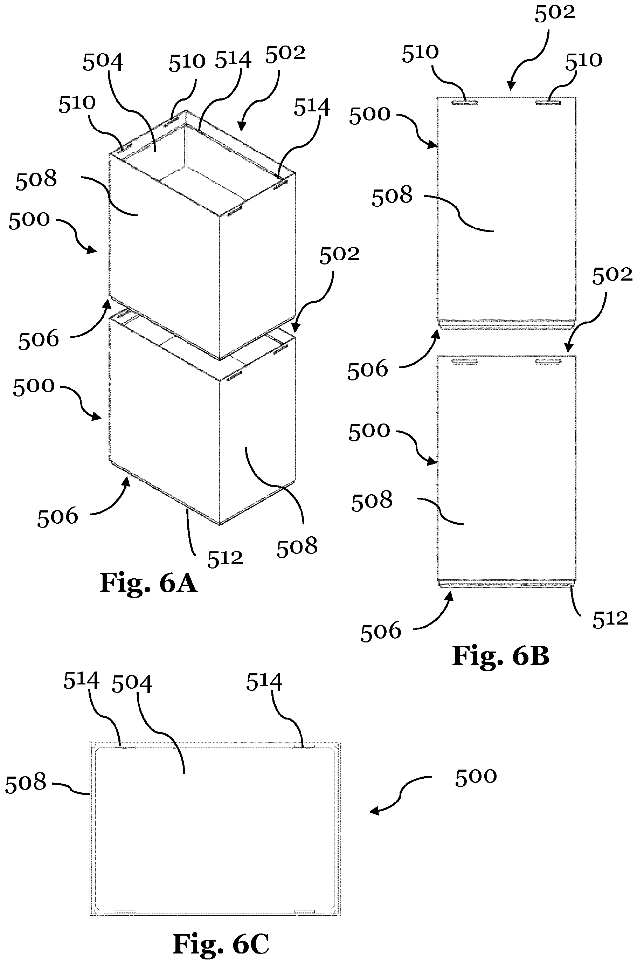

Example stacker frames 500 are shown in more detail in Figs. 6A to 6C. Each of the stacker frames 500 has an open top end 502 for allowing a storage container 504 to pass into the stacker frame. As already noted, each stacker frame 500 is configured to accommodate a plurality of storage containers 504 stored one on top of another in a vertical stack within the stacker frame 500. Each stacker frame 500 is therefore configured to support the lowermost storage container 504 within the stacker frame 500. One or more further storage containers 504 are then placed on top of the lowermost storage container 504, with each container 504 supporting the container placed above it.

Each stacker frame 500, comprises a bottom end 506, for supporting a lowermost storage container 504. In the present example, side walls 508 extend between the bottom end 506 and the top end 502. In other examples, stacker frame 500 may simply comprise a framework defining the frame within which the containers 504 are held and so side walls 508 may be largely omitted.

In this implementation, connecting recesses 510 are arranged at the top end 502 within opposing side walls 508. The connecting recesses 510 are arranged such that they are accessible and protrude above the top of the uppermost storage container 504 in the stack of storage containers 504 within each stacker frame 500 when the stacker frame 500 is full. These recesses 510 enable the stacker frames 500 to be placed into and lifted out of a storage column of the grid, as will be described in further detail below.

To facilitate efficient storage and enable stacker frames 500 themselves to be stacked, the bottom end 506 of each stacker frame 500 may have a recessed portion 512 having an outer periphery being smaller than, i.e., configured to fit within, an inner periphery of the top end 502 of another stacker frame 500. In this manner, the stacker frames 500 may be stacked on top of one another while horizontal movement between them is restricted to improve stability.

As can be seen in the top-down view of a stacker frame 500 in Fig. 6C, each storage container 504 held within the stacker frame 500 in this implementation includes connecting recesses 514. These recesses 514 are arranged in the upward facing surface or upper rim of the sidewalls of the storage container 504. These recesses enable the containers 504 to be placed into and lifted out of the stacker frame 500, as will be described in further detail below.

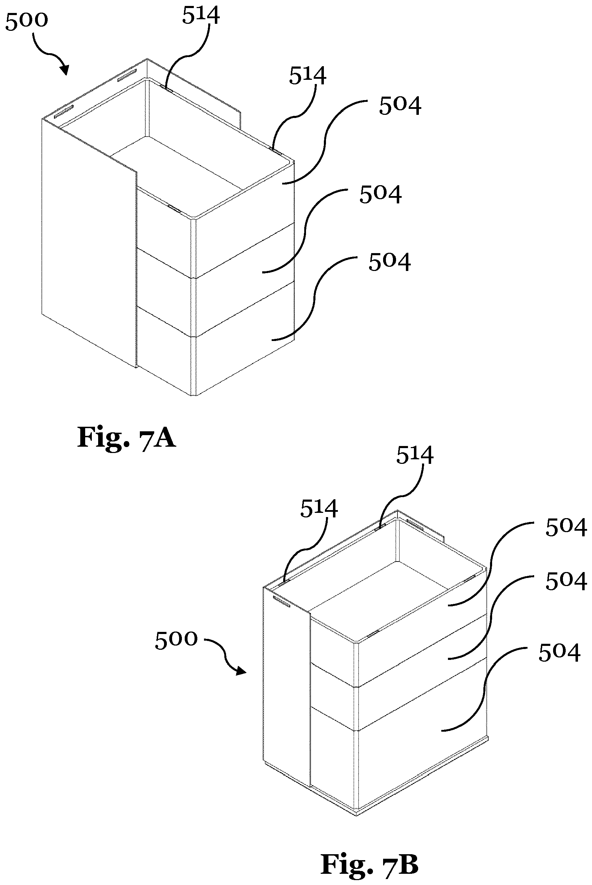

Figs. 7A and 7B show stacker frames 500 with a cut-away section to better illustrate the stacking of the storage containers 504 inside the stacker frame 500. The stacker frame 500 shown in Fig. 7A has three evenly sized storage containers 504, whereas in the stacker frame 500 shown in Fig. 7B the lowermost storage container 504 is larger in height than the other storage containers 504. The number, shape, and size of storage containers 504 that can be accommodated within any given stacker frame 500 may vary. As noted above, typically there are between two and six storage containers 504 within a stacker frame 500 when the stacker frame 500 is full.

As noted above, stacker frames 500 can be stored in grid 100 and moved around by container-handling vehicles 202, 204 in a similar manner to ordinary storage containers 112. A variety of modifications may be made to the container-handling vehicles 202, 204 to enable them to better interact with stacker frames 500 and the containers 504 stored within stacker frames. Some example implementations detailing such modifications will now be described, however it will be appreciated that other suitable mechanism may be provided additionally or alternatively.

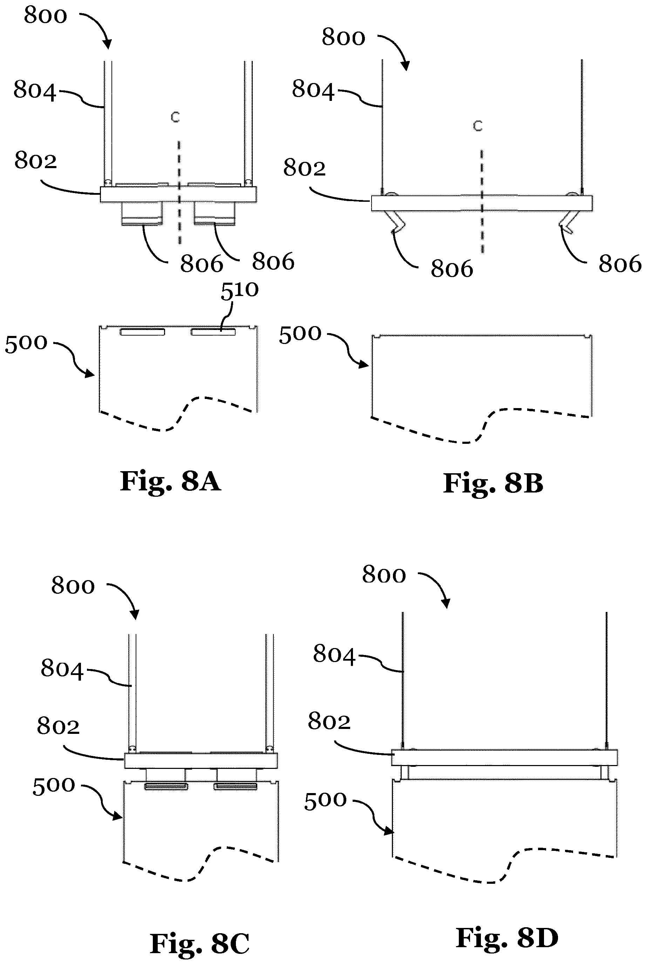

Figs. 8A-D, 9 and 10 show an example lifting device 800 to enable container-handling vehicles 202, 204 to lift stacker frames 500. The lifting device 800 maybe provided as the lifting device 304 of container-handling vehicle 202 or the lifting device 312 of container-handling vehicle 204. The lifting device 800 is configured to engage with a stacker frame 500 such that the stacker frame 500 may be lifted or lowered into or out of a column 102 of the grid 100.

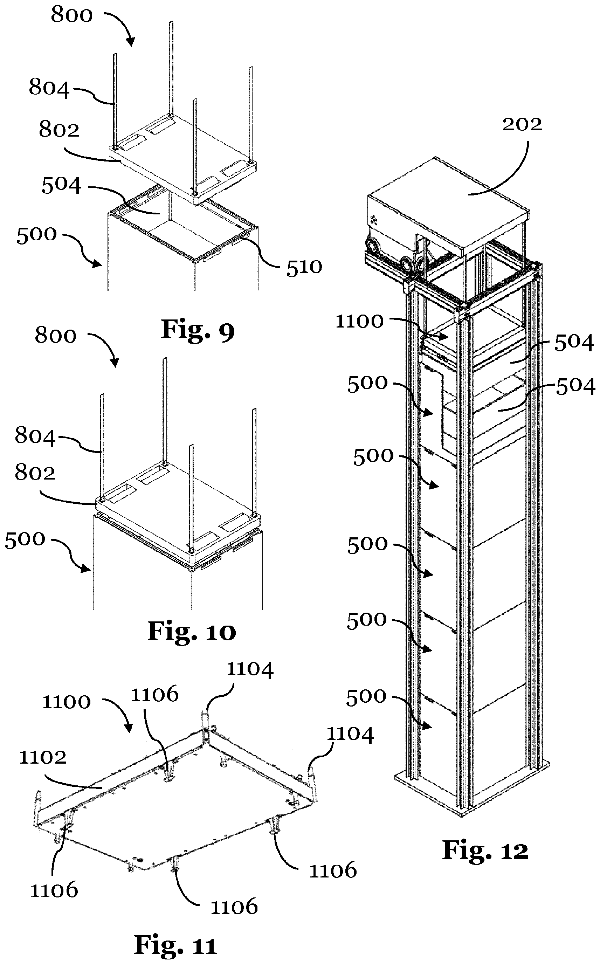

The lifting device 800 in this example comprises a lifting frame 802 connected to lifting bands 804, which are windable/winchable from at least one lifting shaft (not depicted) of the container-handling vehicle 202, 204 to lift or lower the lifting frame 802. The lifting frame 802 comprises a horizontal element, as depicted, and latches 806 arranged on the lifting frame 802. The latches are an example implementation of a gripping device, such as gripping device 308 or 322 described above. The latches 806 are configured to move between a release position, as shown in Figs. 8A, 8B and 9, and a connected position, as shown in Figs. 8C, 8D and 10. In the release position the latches 806 are closer to a vertical centreline C of the lifting frame 802 than in the connected position. When moving from the release position to the connected position, the latches 806 are moved away from the vertical centreline C and are configured to extend through the connecting recesses 510 in the side wall 508 of a stacker frame 500.

The latches 806, when engaged with connecting recesses 510, are positioned within an interior space of the stacker frame 500. This is particularly advantageous as the space provided between adjacent columns 102 of the grid 100 can be reduced as the lifting device 800 requires no clearance outside of the stacker frame 500.

Figs. 11 and 12 show a lifting device 1100 for lifting storage containers 504 out of stacker frames 500. The lifting device 1100 may be provided as the lifting device 304 of container-handling vehicle 202 or the lifting device 312 of container-handling vehicle 204. The lifting device 1100 is configured to engage a storage container 504 for lifting or lowering the storage container 504 relative to a stacker frame 500 in which the storage container 500 is stored.

The lifting device 1100 may comprise a lifting frame 1102 connected to lifting bands 1104, which are windable/winchable from at least one lifting shaft (not depicted) of the container-handling vehicle 202, 204 to lift or lower the lifting frame 1102. The lifting frame 1102 comprises a horizontal element, as depicted, and grippers 1106 arranged on the lifting frame 1102. The grippers 1106 are configured to releasably engage connecting recesses 514 arranged in an upper rim of a storage container 504 as illustrated in Figs. 6A, 6C, 7A and 7B.

Container-handling vehicles 202, 204 may be configured to retrieve a storage container 504 via an open top end 502 of a stacker frame 500, as shown for example in Fig. 12. In this figure the uppermost stacker frame 500 in Fig. 12 has a cut-away section to better illustrate the stacking of the storage containers 504 inside the stacker frame 500. The topmost container 504 has been lifted out of the topmost stacker frame 500 by container-handling vehicle 202.

To enable a storage container 504 to be retrieved from a stacker frame 500 in this way, the lifting frame 1102 in this example has an outer periphery configured to fit within an inner periphery of the side walls of the stacker frame 500. The inner periphery of the side walls of the stacker frame 500 may be configured to guide the lifting frame 1102 when within the stacker frame 500.

Example lifting mechanisms to enable a container-handling vehicle 202, 204 to lift a stacker frame 500 or container 504 from a stacker frame have been described with reference to Figs. 8A-12. However, it will be appreciated that these mechanisms are merely exemplary. Other mechanisms can be used, and both stacker frames 500 and containers 504 may be modified appropriately to accommodate an alternative form of lifting mechanism.

### Sleeves for multi-container frames and/or storage containers

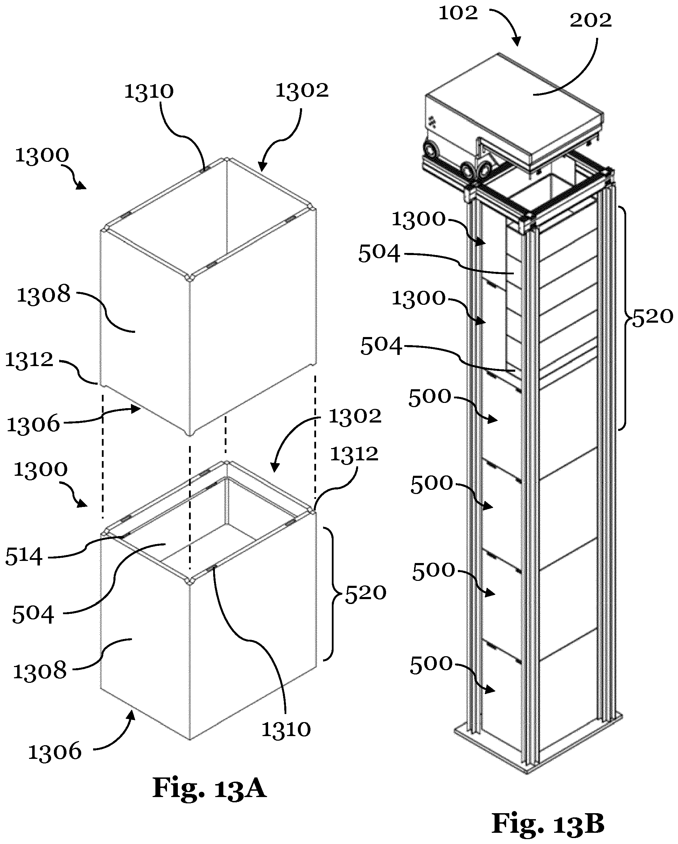

One or more sleeves 1300 may cooperate with the multi-container frames 500 (referenced above), to enable ease of batching different storage containers 504 together, and/or to accommodate stacks of storage containers 504 which exceed the capacity of the multi-container frames 500. For example, Figs. 13A and 13B illustrate sleeves 1300 in a stack and configured to accommodate storage containers 504.

With reference to Fig. 13A, each sleeve 1300 comprises an open top end 1302 for allowing a storage container 504 to pass into a vertical passage within the sleeve 1300, sidewalls 1308, and an open bottom end 1306. The open top end 1302 and open bottom end 1306 of the sleeve 1300 enable an efficient accommodation and support of the storage container 504 without impacting the vertical height of the container, thereby improving space efficiency in the grid. Similarly, since the sleeve 1300 may not support a lowermost storage container 504, the sleeve 1300 can be formed from a more lightweight material than stacker frame 500.

Each sleeve is configured to accommodate a storage container or a plurality of storage containers 504 in one or more vertical stacks 520. The vertically arranged stack 520 may comprise 2 to 6 storage containers, though it will be appreciated that stacks of sleeves 1300 and/or stacker frames 500 together may enable a larger stack. For example, Fig. 13B illustrates a vertical column 102 of the storage grid including a lower stack of multi-container frames 500 nested below an upper stack of sleeves 1300. The sleeves 1300 are placed above the multi-container frames 500 to accommodate and extend the vertical stack 520 of storage containers 504 (visible in the cross-sectional view of sleeves 500, which is provided for illustrative purposes). In this way, the open bottom end 1306 of the sleeve 1300 facilitates the extension of the vertical stack 520 of storage containers 504, to exceed the capacity of the stacker frame 500. Additionally, the added capacity for storage containers 504 provides more flexible storage arrangements / configurations within the storage grid, which may be of particular use when temporarily storing storage containers during a digging process.

With reference to Fig. 13A, the sleeve 1300 comprises attachments in the form of attachment recesses 1310, to which grippers of a container/sleeve-handling vehicle 202, 204 can couple in order to lift or lower the sleeve 1300. The sleeve 1300 also comprises complementary formations 1312 provided, respectively on the upper and lower rims of the side walls 1308, configured to facilitate stacking with neighbouring/adjacent sleeves 1300. The complementary formations 1312 enable a sleeve 1300 to interface with, and align with, the neighbouring sleeve 1300 in a stack, as indicated by the illustrative dotted lines in Fig. 13A. It is to be understood that 'align' refers to a vertical alignment of the complimentary formations such that sleeves may connect in layers or stacks to form a cohesive structure.

Whilst Figs. 13A and 13B illustrate the sleeve 1300 in cooperation with stacker frame 500, it will be appreciated that the sleeve may be used with any automated storage and retrieval system, such as the grid of Fig. 1, and accommodating one or more storage containers may refer to any suitable storage container arranged within the grid, i.e., a smaller storage container.

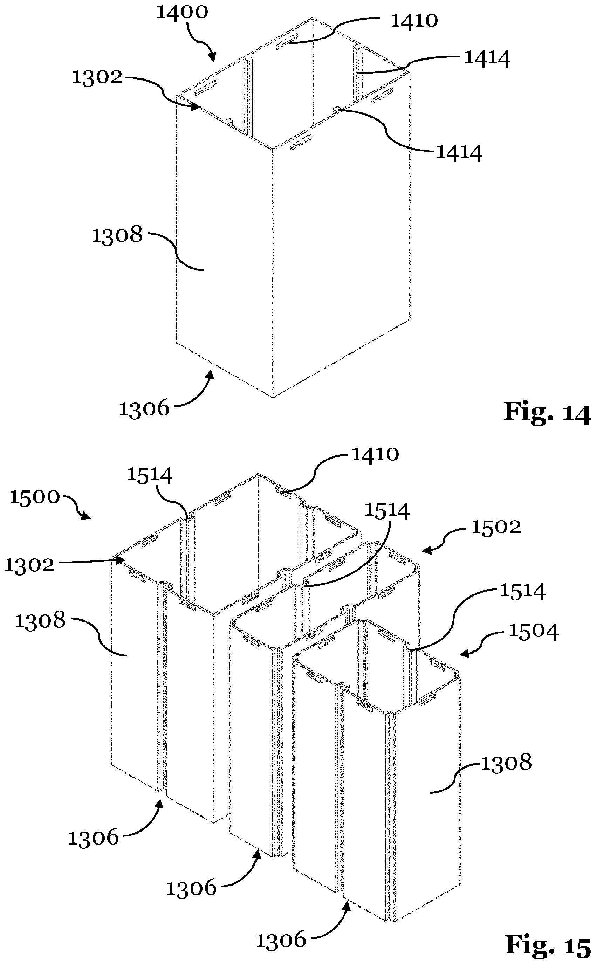

Turning now to Fig. 14, a sleeve 1400 comprises inner walls 1414 protruding from each sidewall 1308, respectively. The inner walls 1414 divide the space within the sleeve 1400 and demarcate four vertical passages, each of which being configured to accommodate one or more storage containers. In this way, inner walls 1414 provide support to multiple smaller storage containers arranged in adjacent vertical passages, thereby enabling further flexibility for arranging, or temporarily storing, different storage containers in the same grid or vertical column 102.

It will be appreciated the attachments of the sleeve 1400 may be of any form suitable to allow lifting and rearranging of the sleeve by the robotic container-handling vehicles 202, 204 or by bespoke robotic sleeve-handling vehicle (not shown). For example, Fig. 14 illustrates a sleeve 1400 comprising attachment recesses 1410, which may be the same or similar to recesses 510 as referenced above with relation to Fig. 6A.

The sleeves 1300, 1400, as referenced above with relation to Fig. 13 and 14, maybe configured to sit directly in a vertical column 102 of the storage grid, in a multi-container frame 500, in a storage container 504, or nested within another sleeve.

Fig. 15 illustrates three example forms of sleeves 1500, 1502, 1504 which are configured to be nested within a sleeve having a wider cross-section, such as the (outer) sleeve 1400 of Fig. 14. In a similar manner to the sleeves referenced above in Figs. 13 or 14, the sleeve 1500, 1502, 1504 comprises an open top end 1302, an open bottom end 1306, sidewalls 1308, and attachments 1410. The sleeve 1500, 1502, 1504 further comprises external notches 1514 formed on the sidewalls 1308, which correspond to inwardly protruding ridges on the inside of the sleeve 1500, 1502, 1504, which provide lateral support to and guide one or more storage containers (or another sleeve) through the respective vertical passages of the sleeve 1500, 1502, 1504. In this way, notches/ridges 1514 may function similarly to the inner walls 1414 of sleeve 1400.

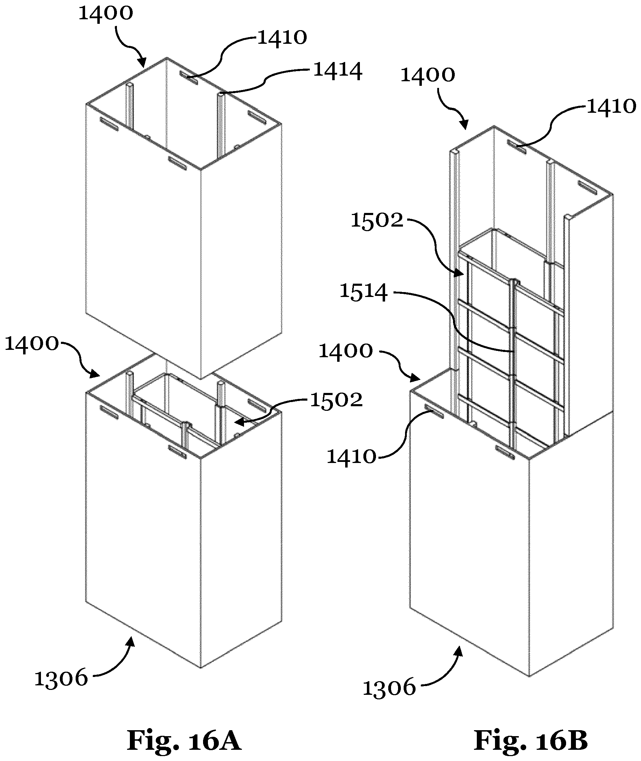

As best shown in Fig. 16A and Fig. 16B, notches 1514 are configured to receive corresponding inner walls 1414 of the outer sleeve 1400. Inner walls 1414 therefore provide support to storage containers (not shown) and to nested sleeve 1502. With reference to Figs. 16A and 16B, by providing nested sleeves 1400, 1502, one vertical column 102 of the storage grid is configurable to accommodate 1, 2, 3, or more, differently sized storage containers, providing further versatility of the storage grid space.

### Sleeves as normalisation elements

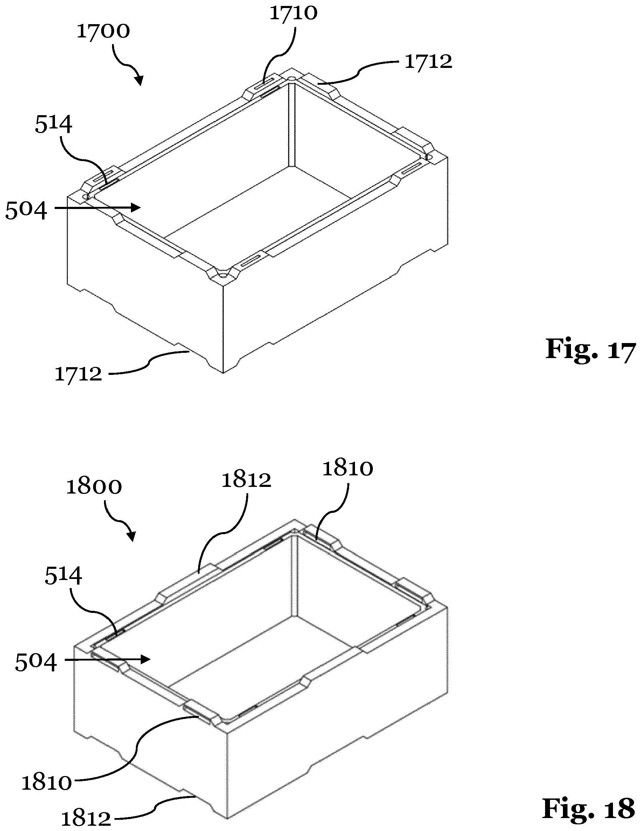

Sleeves may also be used as normalisation elements or adaptors for one or multiple storage containers. For example, Fig. 17 and 18 illustrate sleeve 1700 and sleeve 1800, respectively, which depict example forms of a normalisation element for a single storage container 504. The normalisation element accommodates a storage container 504, which would otherwise be too small to fit within a storage column of the grid or to small to be accurately retrieved by a robotic container-handling robot. In this way, the normalisation element assists with alignment and dimension conformity within the storage grid, particularly in systems with non-normalised storage containers.

Figs. 17 and 18 also illustrate different example features for aligning/stacking and retrieving a sleeve. In particular, with reference to Fig. 18, sleeve 1800 comprises corresponding formations 1812 on the upper and lower rims of the side walls, in the form of ridges and corresponding grooves, to facilitate alignment of the sleeve 1800 in a stack. The upper rim of the sidewall also comprises attachments 1810, configured to attach to or be gripped by a lifting mechanism of the robotic container-handling vehicle.

### Temporary storage of storage containers

During a digging process to retrieve a particular storage container, other storage containers may be temporarily stored until the particular container is retrieved from the stack. As discussed above, a sleeve may adapt the dimensions in a vertical column and/or extend the capacity of a multi-container frame. Thus, by providing one or more sleeves, we enable storage containers to be more efficiently temporarily stored in a preferred location in a storage grid.

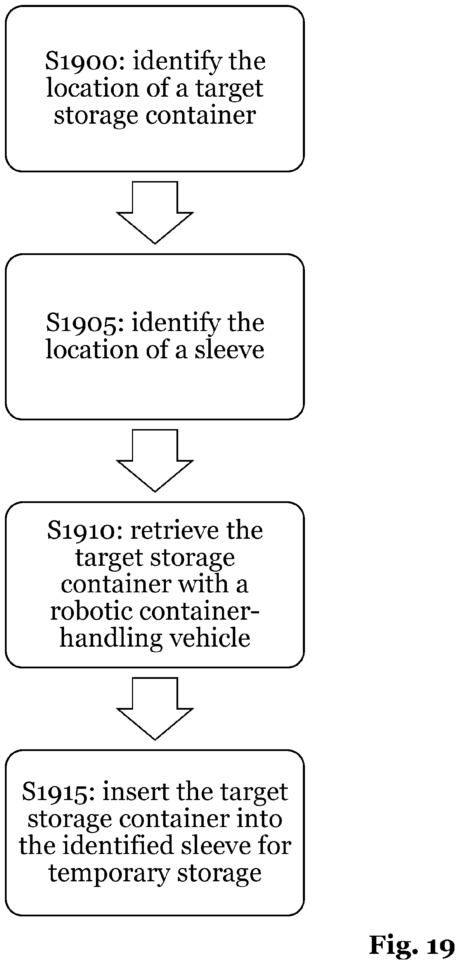

With this in mind, and with reference to Fig. 19, a method of temporarily storing storage containers 504 in a container storage and retrieval systems comprises identifying, at step 1900, and if not already known, the location of a storage column 102 with a multi-container frame 500 in which is nested a target storage container 504. The location of a sleeve 1300 is also identified, at step 1905. This may include, for example, identifying the most easily accessed sleeve, or the sleeve with the most capacity. The sleeve 1300 may also be rearranged within the grid, if necessary. The method also comprises, at step 1910, retrieving the target storage container 504 with a robotic container-handling vehicle 202 and inserting, at step 1915, the target storage container 504 into the identified sleeve 1300 for temporary storage.

The location of the temporarily stored storage container 504 may be logged, such that, e.g., after a digging process is complete, the storage container 504 can be returned to its original location in the storage grid.

Further examples of the presently disclosed systems and methods include the following:

A computer-readable medium, or computer program, comprising instructions which, when executed by a computer, cause the computer to carry out any of the methods discussed herein.

A controller comprising a processor and a memory, the controller configured to perform any of the methods discussed herein.

A storage system according to any implementation discussed herein, comprising a multi-container frame, and a sleeve supported atop the multi-container frame, the multi-container frame and sleeve together accommodating a plurality of storage containers stacked on top of another forming at least one vertical stack.

A storage system according to any implementation discussed herein, wherein the container-handling vehicle is configured to retrieve the sleeve from, and lower the sleeve into, a vertical column of the storage grid.

The use of a sleeve in an automated storage and retrieval system as a normalisation element or adaptor for one or more smaller storage containers, wherein the sleeve is configured to be arranged in a vertical column of a storage grid, and wherein the sleeve is used to accommodate the one or more storage containers and/or to support one or more vertical stacks of the storage containers.

It is to be understood that the above description is intended to be illustrative, and not restrictive. Many other implementations will be apparent to those of skill in the art upon reading and understanding the above description. Although the present disclosure has been described with reference to specific example implementations, it will be recognized that the disclosure is not limited to the implementations described, but can be practiced with modification and alteration within the spirit and scope of the appended claims. Accordingly, the specification and drawings are to be regarded in an illustrative sense rather than a restrictive sense. The scope of the disclosure should, therefore, be determined with reference to the appended claims, along with the full scope of equivalents to which such claims are entitled.

## Claims

1. A sleeve for accommodating one or more storage containers in a storage and retrieval system, the sleeve comprising:
an open top end for receiving and releasing one or more storage containers;
an open bottom end; and
side walls;
wherein the sleeve is configured to allow passage of the one or more storage containers through the open top end.

2. The sleeve of claim 1, wherein one or more vertical passages of the sleeve are adapted to provide lateral support to and guide the one or more storage containers through the sleeve.

3. The sleeve of claim 2, wherein the one or more vertical passages of the sleeve each comprise at least one inner wall protruding inwardly from the side walls, wherein the at least one inner wall is adapted to provide lateral support to and guide the one or more storage containers through the one or more vertical passages.

4. The sleeve of any preceding claim, further comprising complementary formations provided, respectively, on the upper and lower rims of the side walls, configured to allow stacking with adjacent sleeves.

5. The sleeve of any preceding claim, wherein the one or more side walls comprise attachments for attaching the sleeve to one or more grippers provided on a robotic vehicle.

6. A container storage and retrieval system including a storage grid and at least one sleeve according to any one of claims 1 to 5 arranged within the storage grid.

7. The system of claim 6, further comprising one or more robotic vehicles arranged to traverse the storage grid, optionally wherein the one or more robotic vehicles are configured to move the sleeve between, and arrange the sleeve at, different locations within the storage grid.

8. The system of claim 7, wherein the one or more robotic vehicles are configured to retrieve and lower a storage container into the sleeve.

9. The system of any one of claims 6 to 8, further comprising one or more storage containers arranged within said at least one sleeve, within the storage grid.

10. The system of claim 9, wherein the inner dimensions of a vertical passage of the sleeve correspond with the outer dimensions of the one or more storage containers.

11. The sleeve of claim 9 or claim 10, wherein the at least one sleeve is configured to vertically guide the one or more storage containers into alignment on top of one another such that a vertically arranged stack comprising two or more storage containers can be arranged within said sleeve, optionally wherein the sleeve is configured to provide side support for the vertically arranged stack of storage containers.

12. The sleeve of claim 11, wherein the stack of storage containers comprises two to six storage containers.

13. The system of any one of claims 9 to 12, wherein said one or more storage containers have a set of first dimensions and wherein the system further comprises at least one storage container having a set of second dimensions, and wherein:
the sleeve is configured to accommodate the storage containers having the first dimensions; and
the sleeve is configured to stack with the at least one storage container having the second dimensions, within in the storage grid.

14. A method of temporarily storing storage containers in a container storage and retrieval system according to claim 7, the method comprising:
identifying the location of one of said sleeves in a first storage column of the storage and retrieval system; and
inserting, with one of the robotic vehicles, a target storage container into the sleeve through the open top end for temporary storage.

15. The method of claim 14, further comprising before said identifying and said inserting:
identifying a second storage column comprising a multi-container frame in which the target storage container is nested; and
retrieving, with the robotic vehicle, the target storage container out of the storage container frame.
